# EUROPÄISCHE PATENTANMELDUNG

(11) **EP 1 276 302 A2**
(43) Veröffentlichungstag der Anmeldung: **15.01.2003**
(21) Anmeldenummer: 02013846.7
(22) Anmeldetag: 22.06.2002
(51) Int. Cl.: H04M 3/42

(54) **Verfahren zur Konfiguration und/oder zum Datenaustausch zwischen einem Telekommunikationsendgerät und einem Host**

(30) Priorität: 09.07.2001 DE 10135372
(71) Anmelder: Detewe-Deutsche Telephonwerke Aktiengesellschaft & Co., 10997 Berlin (DE)
(72) Erfinder: Blaha, Martin, 12043 Berlin (DE); König, Michael, Dr., 10318 Berlin (DE)

(57) **Zusammenfassung**

Verfahren zur Konfiguration und/oder zum Austausch von Daten zwischen einer mit einem Netzwerk gekoppelten Telekommunikationseinrichtung eines Benutzers und einem an das Netzwerk angeschlossenen Host, bei dem die Konfigurationsparameter für die Inbetriebnahme und für den laufenden Betrieb der Telekommunikationseinrichtung sowie benutzerspezifische Daten und/oder Applikationen mit einer im Netzwerk bereitgestellten Komponente des Host eingestellt bzw. verändert werden.

## Beschreibung

Die Erfindung bezieht sich auf ein Verfahren zur Konfiguration und/oder zum Austausch von Daten zwischen einer mit einem Netzwerk gekoppelten Telekommunikationseinrichtung eines Benutzers und einem Host.

Es ist bekannt, die Telekommunikationsanlage eines Benutzers, an der mehrere Endgeräte wie Systemtelefone, Schnurlostelefone, Telefaxgeräte und dergleichen angeschlossen sind, über einen Personal Computer (PC), der über eine geeignete lokale Schnittstelle mit der Telekommunikationsanlage verbunden wird, zu konfigurieren und in Betrieb zu nehmen. Zu diesem Zweck wird ein vom Hersteller der Telekommunikationsanlage geliefertes Programm in den PC geladen und der Benutzer kann die verschiedenen Konfigurationsparameter im Rahmen eines von der Programmsoftware vorgegebenen Dialogs einstellen. In gleicher Weise erfolgt die Veränderung der Konfigurationsparameter im laufenden Programm über die lokale Schnittstelle zwischen dem PC und der Telekommunikationsanlage des Benutzers. Diese lokale Konfiguration mit Rufnummern- und Namenseingaben ist vergleichsweise umständlich und erfordert einige Kenntnisse und Erfahrung des Benutzers.

Aus der WO 00/39988 ist ein Verfahren bekannt, Telekommunikationsanlagen über ein Netzwerk mit einem entfernten Host zu verbinden und unter Verwendung einer Navigations-Schnittstelle (WebBrowser-Schnittstelle) auf verschiedene, vom Host zur Verfügung gestellte Dienste zuzugreifen.

Aufgabe der vorliegenden Erfindung ist es, die Funktionalität einer Telekommunikationseinrichtung um die in einem Netzwerk verfügbaren Dienste zu erweitern und insbesondere ein Verfahren anzugeben, bei dem die Einstellung der Konfigurationsparameter für die Inbetriebnahme und die Veränderung bestehender Parameter im laufenden Betrieb der Telekommunikationseinrichtung nicht lokal, sondern über ein zentrales Benutzermanagement für eine Vielzahl von Benutzern erfolgt und ein Datenaustausch zwischen der Telekommunikationseinrichtung und einem entfernten Host zur Bereitstellung netzwerkbasierter Applikationen ermöglicht wird.

Diese Aufgabe wird erfindungsgemäß durch die Merkmale des Anspruchs 1 gelöst. Vorzugsweise stellt der Host der Telekommunikationseinrichtung des Benutzers benutzerspezifische Daten und/oder Applikationen bereit bzw. verändert diese Daten.

Die erfindungsgemäße Lösung erweitert die Funktionalität einer Telekommunikationseinrichtung um die in einem Netzwerk, beispielsweise im Internet, verfügbaren Dienste und ermöglicht die Einstellung von Konfigurationsparametern für die Inbetriebnahme und Veränderung bestehender Parameter im laufenden Betrieb einer Telekommunikationseinrichtung über ein zentrales Benutzermanagement und einen Datenaustausch zwischen der Telekommunikationseinrichtung und einem Host, so daß sämtliche Daten und Einstellungen zentral im Netzwerk abgelegt und jederzeit verfügbar sind. Damit schafft die erfindungsgemäße Lösung eine vollkommene Verknüpfung einer Telekommunikationseinrichtung mit einem Netzwerk wie dem Internet und ermöglicht die Auslagerung von Benutzeranwendungen.

Die erfindungsgemäße Lösung stellt somit eine Schnittstelle zwischen einer Internetapplikation und der Telekommunikationseinrichtung des Benutzers dar, bei der eine Host- oder serverseitige Applikation aus den Benutzerangaben einen Datensatz generiert und diesen an den Benutzerbrowser sendet, so dass ein Datenaustausch zwischen dem Open Application Interface (OAI - Offene Applikationsschnittstelle) und Internetapplikationen möglich ist. Damit werden gleichzeitig die Voraussetzungen dafür geschaffen, dass der Browser um ein OAI-Plug-IN erweitert wird.

Eine vorteilhafte Ausgestaltung des erfindungsgemäßen Verfahrens ist durch den Aufbau einer Wählverbindung zwischen der Telekommunikationseinrichtung und dem Host, Identifikation der Telekommunikationseinrichtung aus einer Serienkennung der Telekommunikationseinrichtung durch den Host, Generieren eines Parametercodes aus der Serienkennung, Authentifizierung des Hosts und Personalisierung des Benutzers, Initialisierung oder Veränderung der Konfiguration der Telekommunikationseinrichtung und/oder Bereitstellung oder Veränderung benutzerspezifischer Daten und/oder Applikationen gekennzeichnet.

Mit dieser Ausgestaltung des erfindungsgemäßen Verfahrens wird allein aus einer Serienkennung der Telekommunikationseinrichtung eine Verbindung zwischen der Telekommunikationseinrichtung eines Benutzers und dem Host sowie eine Authentifizierung des Benutzers und Beeinflussung der Konfigurationsparameter der Telekommunikationseinrichtung durchgeführt.

Vorzugsweise setzt sich der Host aus einem Verbindungsserver und einem Managementserver zusammen, wobei der Verbindungsserver einen Link enthält, der einen Benutzer über eine URL (Uniform Resource Loader - eine eindeutige Webadresse, unter der sich eine Website aufrufen läßt) des Verbindungsservers zum Managementserver führt und der Managementserver alle lizenzierten Verbindungsserver verwaltet, die Authentifizierungen und Konfigurationen der Telekommunikationseinrichtungen der Benutzer enthält und die Datenbank aller Benutzerdaten betreibt, wobei die einzelnen Verbindungsserver die Zugangspunkte für die Benutzer darstellen, die nicht direkt auf den Managementserver, sondern nur über den ihnen zugeordneten Verbindungsserver eines Lizenznehmers des den Managementserver betreibenden Providers zugreifen können.

Diese Konfiguration des Host ermöglicht es, zwischen einem Diensteprovider und einem Lizenznehmer des Providers zu unterscheiden, wobei der Diensteprovider üblicheraber nicht notwendigerweise der Hersteller der Telekommunikationseinrichtungen der Benutzer und Serviceanbieter, beispielsweise im Rahmen von Wartungsverträgen oder Dienstleistungsverträgen, ist.

Diese Aufteilung des Host ermöglicht es, daß ein Erstzugang bzw. eine Neuanmeldung den Benutzer zum Managementserver führt, bei dem er sich als Endkunde anmeldet, daß eine im vorbereiteten und nunmehr aktivierten Benutzerprofil enthaltene URL des Lizenznehmers unverändert in die Telekommunikationseinrichtung des Benutzers übertragen wird und daß die Übermittlung und sichere Speicherung der URL des Verbindungsservers zur Zuordnung der der Telekommunikationseinrichtung zugeordneten Anlagensoftware zum Lizenznehmer bzw. Verbindungsserver führt.

Bei allen weiteren Zugriffen wird der Benutzer auf die URL des Verbindungsservers geführt, wobei die Telekommunikationseinrichtung des Benutzers fest mit dem Lizenznehmer des Providers assoziiert ist und dem Benutzer einen exklusiven Zugang garantiert und etabliert und der Benutzer für alle weiteren Konfigurationen seiner Telekommunikationseinrichtung den beim Verbindungsserver eingerichteten Link wählt, der ihn über die URL des Verbindungsservers zum Managementserver führt.

Zur Schaffung einer einfachen Verbindung zwischen dem Host und dem Benutzer identifiziert die Serienkennung der Telekommunikationseinrichtung des Benutzers den Hersteller und den Typ der Telekommunikationseinrichtung und verifiziert über einen Algorithmus, der in Form einer logischen Überprüfung in einem Authentifizierungsprozess ohne Verwendung einer speziellen Datenbasis einsetzbar ist.

Weitere vorteilhafte Ausgestaltungen des erfindungsgemäßen Verfahrens sind den Merkmalen der Ansprüche 8 bis 24 zu entnehmen.

Anhand eines in der Zeichnung dargestellten Ausrührungsbeispieles soll der der Erfindung zugrunde liegende Gedanke näher erläutert werden. Es zeigen:
- Figur 1: ein Blockschaltbild des Prinzips eines Open Application Interface (OAI);
- Figur 2: eine schematische Blockbilddarstellung des Erstzugangs eines Benutzers zum Host;
- Figur 3: eine schematische Blockbilddarstellung einer Konfigurationsübermittlung vom Host zur Telekommunikationseinrichtung eines Benutzers;
- Figur 4: eine schematische Blockbilddarstellung einer Managementserver-Umgebung mit mehreren an einen Managementserver angeschlossenen Verbindungsservern und
- Figur 5: ein Ablaufdiagramm für einen Authentifizierungsprozess.

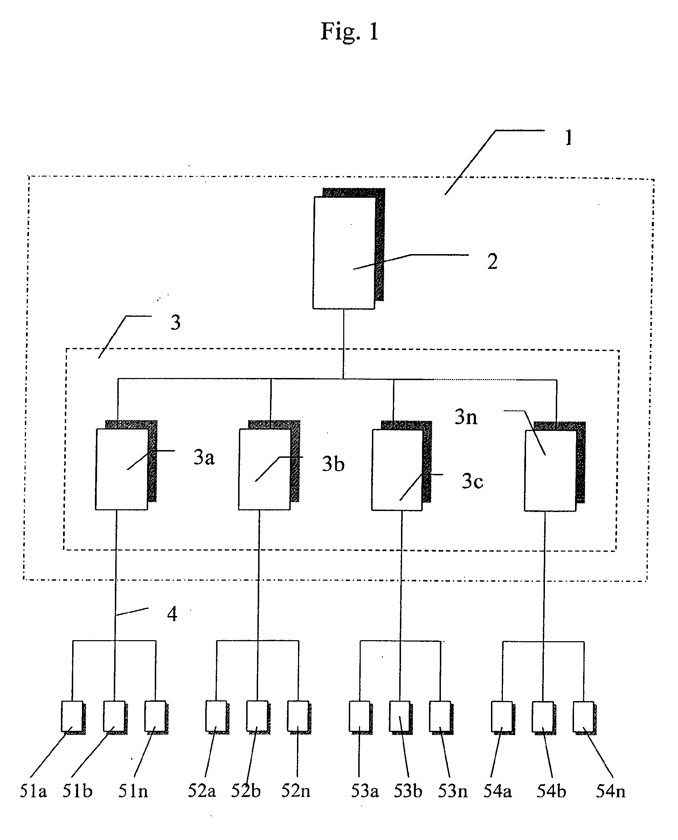

Figur 1 zeigt in einer Prinzipdarstellung ein Blockschaltbild der Verbindung eines Host 1 über ein Netzwerk 4 mit mehreren Telekommunikationseinrichtungen 51a bis 54n verschiedener Benutzer, wobei die Telekommunikationseinrichtungen 51a bis 54n aus der Verbindung einer Telekommunikationsanlage mit einem Personal Computer der Benutzer oder aus einer netzwerkfähigen Telekommunikationsanlage, das heißt beispielsweise einer internetfähigen Telekommunikationsanlage besteht. Der Host 1 setzt sich aus einem Managementserver 2 zur Bereitstellung einer Servermanagementumgebung und mehreren Verbindungsservern 3a bis 3n zusammen, die ebenfalls über das Netzwerk 4, beispielsweise das Internet, verbunden sind. Während der Managementserver 2 vom eigentlichen Diensteanbieter des Open Application Interface betrieben und die Managementserverumgebung alle Benutzer von lizenzierten Verbindungsservern verwaltet und die Authentifizierung und Konfiguration der Telekommunikationseinrichtungen der Benutzer enthält, weisen die Verbindungsserver lediglich einen Link auf, der einen Benutzer über einen Verbindungsserver-URL zum Managementserver führt, so daß die Anmeldung und Verwaltung eines Benutzers nicht auf dem seiner Telekommunikationseinrichtung zugeordneten Verbindungsserver, sondern beim Managementserver erfolgt. Die Datenbank aller Benutzerdaten wird somit nicht bei den die Verbindungsserver betreibenden Lizenznehmern des den Managementserver betreibenden Diensteproviders, sondern beim Diensteprovider selbst betrieben. Die Verbindungsserver stellen dabei den Zugangspunkt für die Benutzer dar.

Die Bezeichnung OAI ("Open Application Interface") steht für eine Gerätekonfiguration über eine Web-basierte Schnittstelle für Telekommunikationsanlagen, die einen Zugang zu einem Netzwerk, beispielsweise zum Internet, ermöglichen. Die Einstellung der Konfigurationsparameter für die Inbetriebnahme und die Veränderung bestehender Parameter im laufenden Betrieb geschieht dabei nicht lokal, sondern mit Hilfe einer webbasierten Komponente eines Hostrechners bzw. Host. Diese Serverkomponente realisiert ein zentrales Benutzermanagement für alle am OAI teilnehmende Endkunden.

Das erfindungsgemäße Verfahren ermöglicht unterschiedliche Realisierungen beim Aufbau einer Verbindung zwischen einer Telekommunikationseinrichtung eines Benutzers und dem Host sowohl in Bezug auf die an die Telekommunikationseinrichtung gestellten Anforderungen als auch in Bezug auf den Dialog mit dem Host.

In einer vereinfachten Realisierung besteht die Telekommunikationseinrichtung aus einer Telekommunikationsanlage und einem mit dieser verbundenen Personal Computer (PC) eines Benutzers, wobei der an die Telekommunikationsanlage angeschlossene PC über eine lokale Komponente verfügt, die die Kommunikation zwischen einem Internet-Browser und der Hardware des PCs und der Telekommunikationsanlage ermöglicht.

In einer vollständigen Realisierung des erfindungsgemäßen Verfahrens ist die Telekommunikationseinrichtung selbst mit der Funktionalität eines Embedded-Web-Servers ausgestattet, so daß die Verwaltung der Konfiguration der Telekommunikationsgeräte ohne Umweg über den PC erfolgen kann. Die Verbindung des PCs mit der Telekommunikationsanlage über ein lokales Netzwerk (LAN), USB oder Bluetooth stellt dem PC ein IP-Gateway ins Netzwerk, insbesondere ins Internet zur Verfügung. Eine Treiberinstallation ist in diesem Fall nicht mehr notwendig.

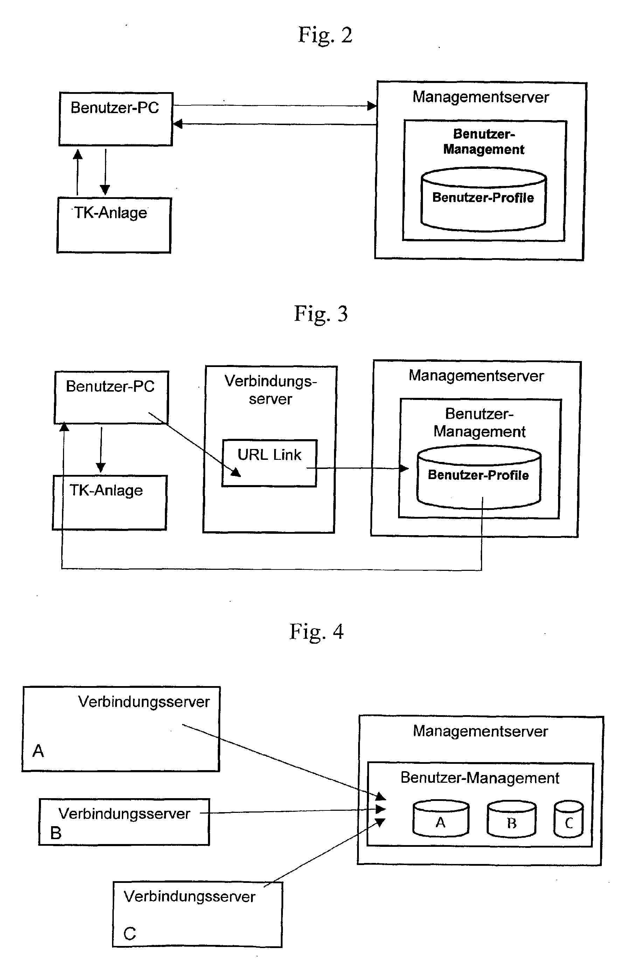

Der Ablauf bei Inbetriebnahme der Telekommunikationsanlage eines Benutzers und der Zugang zum Netzwerk (Internet) erfolgen für den Benutzer in transparenter Form, d.h. als ein zusammenhängender Ablauf, der keine Interaktion benötigt. Zum besseren Verständnis des erfindungsgemäßen Verfahrens werden nachfolgend der Aufbau der Systemkomponenten und die einzelnen Schritte bei der Ausführung des erfindungsgemäßen Verfahrens unter Bezugnahme auf die Figuren 2 bis 5 der Zeichnung dargestellt.

### 1. Inbetriebnahme

### 1.1. Aufbau einer (ISDN-) Wählverbindung, Lesen der Benutzerkennung und Generieren einer URL

Beim in Figur 2 schematisch dargestellten Erstzugang eines Benutzers zur Übermittlung und sicheren Speicherung der Verbindungsserver-URL nimmt der Benutzer die Telekommunikationsanlage in Betrieb, indem er die Telekommunikationsanlage an den PC anschließt und eine vom Provider, d.h. dem Anbieter des Open Application Interface mitgelieferte Treibersoftware in den PC lädt. Das vorausgesetzte Betriebssystem verfügt über Plug&Play Fähigkeiten, so dass die Treiberinstallation weitgehend ohne Benutzerinteraktion erfolgen kann. Mit der Installation werden ggf. eine Standard-RemoteAccessVerbindung und ein entsprechender "Link" auf dem Desktop des Benutzer-PC eingerichtet. Dabei beschreibt der "Link" am Desktop keinen einfachen URL-Link, sondern verweist auf ein Programm, das die Kennung der Telekommunikationsanlage ausliest und - wenn notwendig - weitere Zugangsdaten erfragt und daran anschließend - nach einer evtl. notwendigen Einrichtung eines Standard-Browsers und einer Wählverbindung - die Verbindungsserver-URL aufruft. Dabei muß zwischen dem ersten Aufruf und allen nachfolgenden Aufrufen unterscheiden werden.

Die Treibersoftware wird zur OAI-basierten Konfiguration der Telekommunikationsanlage benötigt und sichert dem Benutzer einen exklusiven Zugang einer Seite des Verbindungsservers zu. Kommt es zu Veränderungen beim Management des Verbindungsservers, so ist ein Update der Software notwendig, um die Zugangsdaten auszutauschen.

Von der Software wird eine Serienkennung aus der Telekommunikationsanlage ausgelesen, die zum einen den Hersteller der Telekommunikationsanlage und zum anderen den Anlagentyp eindeutig identifiziert. Diese Serienkennung ist über einen Algorithmus, d.h. ohne Verwendung einer speziellen Datenbasis, verifizierbar, wobei der Algorithmus in Form einer logischen Überprüfung auf Basis der typischen Syntax einer Skriptsprache in einem Authentifizierungsprozess einsetzbar ist.

Aus der Serienkennung wird ein Parametercode generiert, der beim Aufruf der Verbindungsserver-URL, die die Funktionalität des OAI besitzt, angehängt bzw. einem HTML-Header integriert wird. Die Kodierung verhindert die Klartextübermittlung der Telekommunikationsanlage, da diese Daten zur Authentifizierung der Verbindungsserverseite und zur Personalisierung des Benutzers verwendet werden.

### 1.2. Einrichtung eines Internet Service Providers (ISP)

Vor dem Aufruf eines Netzwerkbrowsers (z.B. eines Internetbrowsers) zur Darstellung der generierten Verbindungsserver-URL wird überprüft, ob eine Standardwählverbindung existiert. Für den Fall, daß keine entsprechende (ISDN-)Wählverbindung eingerichtet sein sollte, wird eine Wählverbindung eingerichtet, die die Call-by-Call Zugangsnummer eines bestimmten Internet Service Providers (ISPs) wählt, die ebenfalls unveränderbar bei der Treiberinstallation hinterlegt wurde.

Im Falle einer notwendigen Einrichtung einer Standardwählverbindung wird der Benutzer über mögliche ISP Verträge informiert. Dies geschieht durch den Start eines zusätzlichen Client-PC-Programmes, das in modularer Fom die möglichen ISP Vertragsdaten bereithält. Aus dem Management-Bereich des Verbindungsservers kann ein entsprechender Download weitere ISP Vertragspartner aktuell dem Benutzer zur Verfügung stellen. Der Benutzer kann aus einer Reihe der angebotenen ISPs seinen Favoriten auswählen und die notwendigen Zugangsformulare sofort ausdrucken und dem ausgewählten ISP zusenden.

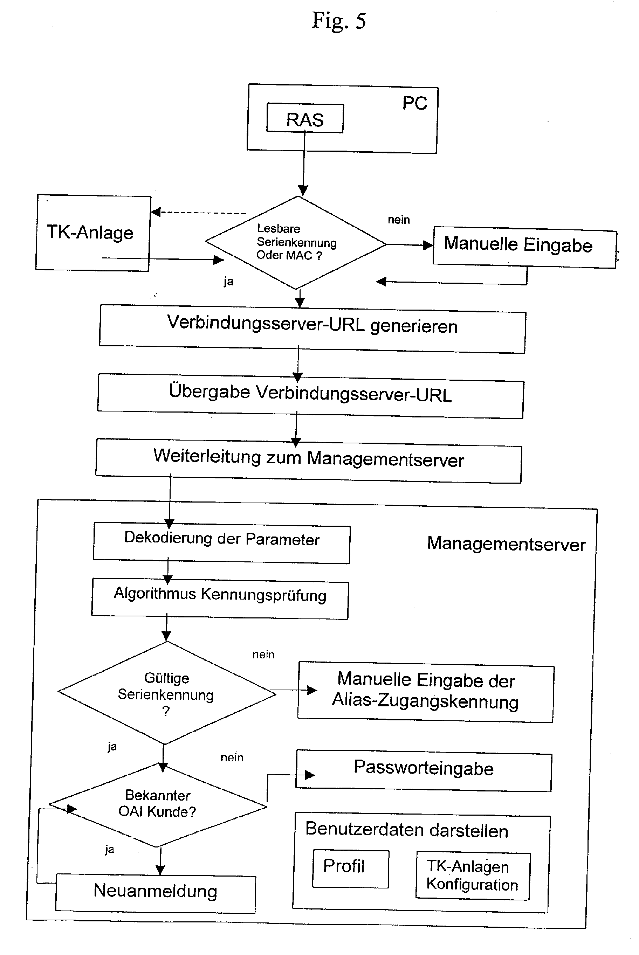

### 1.3 Authentifizierung (Figur 5)

Der durch die URL adressierte Verbindungsserver empfängt die kodierten Parameter und ermittelt daraus - ohne Benutzerinteraktion - die mitgelieferte Serienkennung mit Hilfe des OAI-Algorithmus'. Der Benutzer wird am Managementserver angemeldet und kann seine Benutzerdaten bearbeiten.

Schlägt die Überprüfung fehl, erfolgt der Zugang also ohne Verwendung einer authorisierten Telekommunikationsanlage, so wird dem Benutzer durch die manuelle Eingabe einer Alias-Zugangskennung eine Authentifizierung ermöglicht, wobei "Alias" für eine benutzerfreundliche Zugangskennung steht, die äquivalent zur "kryptischen" OAI-Benutzerkennung benutzt wird. Voraussetzung hierfür ist, daß der Benutzer bereits ein angemeldeter OAI-Kunde ist und bei seiner Erstanmeldung die Alias-Zugangskennung wie auch das zugehörige Passwort eingerichtet wurde. Wird das Passwort mehrfach falsch eingegeben, so wird die manuelle Eingabe der OAI-Benutzerkennung bzw. des OAI-Benutzeralias ermöglicht.

Die manuelle Zugangsmöglichkeit ist notwendig, da nicht davon ausgegangen werden kann, dass der Zugang zum Verbindungsserver immer über eine authorisierte Telekommunikationsanlage des Providers geschieht. Ein mobiler Benutzer kann somit auch unterwegs, d.h. ohne Benutzung seiner häuslichen Telekommunikationsanlage bestimmte personalisierte Dienstleistungen wie beispielsweise einen persönlichen Terminkalender, eine Webmail-Präsenz oder ähnliche Dienste im Rahmen einer Web-Organizer Umgebung weiter nutzen. Der Zugriff auf sein Benutzerprofil kann neben der transparenten Authentifizierung durch die Serienkennung der Telekommunikationsanlage auch über die manuelle Authentifizierung über den Alias des Benutzers erfolgen.

Bei einer Neuanmeldung eines Benutzers wird gemäß den Figuren 2 und 5 das Benutzerprofil erstellt, das neben den Daten für Anschrift, Adresse, Angaben zur Zahlungsabwicklung usw. auch die Standardeinstellungen der Telekommunikationsanlage des Benutzers beinhaltet. Der Benutzer kann ausgehend von einem Standard die Konfiguration individuell gestalten und über die OAI an seine Telekommunikationsanlage übermitteln. Dabei bleibt die Standardkonfiguration dem Benutzer als "Fall-Back-Solution" erhalten, und kann immer wieder zur gezielten Rücksetzung der Anlage benutzt werden. Die Übermittlung der Konfiguration zur Telekommunikationsanlage geschieht über die bestehende gesicherte SSL Verbindung zwischen beispielsweise dem Explorer auf der Benutzerseite und dem Managementserver.

### 2. Konfiguration der Telekommunikationsanlage

Nach erfolgter Authentifizierung kann der Benutzer gemäß Figur 3 die Konfiguration seiner Telekommunikationsanlage initialisieren und später weiter verändern. Es besteht die Möglichkeit, mehrere Konfigurationen der Anlage Web-basiert im geschützten Bereich des Benutzers abzuspeichern. Die Konfigurationen sind mit seiner Serienkennung fest verbunden. Der Benutzer besitzt damit die Möglichkeit mehrere Konfigurationen seiner Telekommunikationsanlage oder aber die Konfigurationen mehrerer, verschiedener Anlagen in seinem Benutzerprofil zu speichern.

Die gesamte Funktionalität der Telekommunikationsanlage ist über die OAI-Schnittstelle durch den Benutzer steuerbar. Diese Eigenschaft richtet sich nach den Möglichkeiten der Telekommunikationsanlage, wobei der Verbindungsserver die entsprechende, anlagenspezifische Software enthält. Dabei ist eine abwärtskompatible Standardisierung vorgesehen, so daß mit der Software des Verbindungsservers für neuere Telekommunikationsanlagen die Ansteuerung älterer Anlagentypen über die neue Software erhalten bleibt. In der zweiten Ausbaustufe mit einer Realisierung der Web-Server Funktionalität einer Telekommunikationsanlage erfolgt die Ansteuerung der Telekommunikationsanlage, d.h. die Übermittlung der Konfiguration, über eine definierte Parameterübergabe, die für alle Telekommunikationsanlagen verwendbar ist.

Neben einer Standardkonfiguration von Telekommunikationsanlagen besteht die Möglichkeit, einige Parameter der Konfiguration nicht aus einem vordefinierten Satz von Einstellungen zu wählen, sondern frei zu wählen. Dies kann z.B. die Zusammenstellung von Kurzwahlnummern sein, die an die Telekommunikationsanlage (und somit auch an eventuell zugehörigen Mobilteile) übermittelt werden. Ebenso können alle gespeicherten Gesprächsdaten ausgelesen und vom Verbindungsserver gepflegt werden. Abhängig vom Speicherbeschränkungen seitens der Telekommunikationsanlage kann die Gesprächsdaten-Übermittlung automatisch bei jeder Benutzerauthentifizierung erfolgen.

Die Übermittlung der vom Benutzer ausgewählten und auf dem Verbindungsserver gespeicherten Konfiguration an die Telekommunikationsanlage geschieht während einer laufenden Netzwerksverbindung (Internetsitzung). Zusätzlich besteht die Möglichkeit, daß auf Wunsch des Benutzers eine (ISDN-)Wählverbindung vom Managementserver zur Telekommunikationsanlage aufgebaut und die gewünschte Konfiguration übertragen wird. Die Telekommunikationsanlage benötigt bei dieser Variante keinen eigenen Speicherplatz für mehrere Konfigurationen. Wahlweise ist die Speichermöglichkeit von mindestens zwei Konfigurationseinstellungen möglich, so dass mittels einer (ISDN-)Wählverbindung die Konfiguration der Telekommunikationsanlage zwischen diesen Alternativen gewechselt werden kann. Dieser Weg in die Telekommunikationsanlage ist von besonderer Wichtigkeit, da nur so die Vorteile des Verbindungsservers voll zum Tragen kommen. So kann neben dem Verbindungsserverzugang über das Netzwerk, z.B. mit Hilfe eines WAP-Handys eine Konfigurationsumschaltung vorgenommen werden. Dabei kann die Konfigurationsumschaltung über den Verbindungsserver zeitgesteuert erfolgen, indem im Benutzerprofil neben den Konfigurationen seiner Telekommunikationsanlage auch die Zeitintervalle der Aktivierung der jeweiligen Konfiguration festgelegt werden.

Aus Sicherheitsgründen ist eine Übermittlung einer Konfiguration an die Telekommunikationsanlage nur durch den Verbindungsserver bei bestehender Benutzeranmeldung, d.h. über das Netzwerk oder durch eine (ISDN-)Wählverbindung mit einer Authentifizierung durch den Verbindungsserver möglich. Die Anmeldung an die Telekommunikationsanlage erfolgt dabei aus einer Kombination aus der Anlagenkennung und der Verbindungsserver MSN. Die Verbindungsserver MSN ist durch den Benutzer nicht zu verändern und wird bei der Anlagenkonfiguration durch den Verbindungsserver in die Firmware geschrieben. Der vorstehend beschriebene Wechsel zwischen zwei in der Telekommunikationsanlage gespeicherten Konfigurationen kann ohne Authentifizierung erfolgen und erfordert lediglich ein Zugangspasswort in Form einer Personal Identification Number (PIN).

Durch die volle Verfügbarkeit der gesamten Funktionalität der Telekommunikationsanlage mittels der Verbindungsserversteuerung kann somit die Message Waiting LED (MWI-LED) unabhängig vom Netzbetreiber angesteuert werden.

Will der Benutzer z.B. bei einer e-Mail, die in seinem persönlichen Web-Organizer eintrifft, benachrichtigt werden, so ruft der Verbindungsserver über die (ISDN-) Wählleitung eine festgelegte MSN (OAI-MSN) der Telekommunikationsanlage an, wobei hierfür z. B. die an Speicherstelle 10 eingetragene MSN dienen kann. Bei diesem Anruf übermittelt der Verbindungsserver eine festgelegte Rufnummer, erkennt anhand der ISDN-D-Kanal Meldung, dass die Telekommunikationsanlage den Ruf erkannt hat und löst die Verbindung aus. Ein Ruf an die OAI-MSN wird dabei nicht an angeschlossenen Endgeräten signalisiert. Aus der Anrufer-MSN und der gerufenen MSN erkennt die Telekommunikationsanlage, daß es sich um einen OAI-Anruf handelt und steuert die MWI-LED an. Der Speicherbereich für MSN, die überprüft werden können, besteht aus mindestens 10 Rufnummern, die sich nicht durch den Benutzer ändern lassen, sondern nur durch den Verbindungsserver eingetragen werden können.

In diesem Zusammenhang sind beispielsweise folgende Differenzierungen möglich:

| **Anruf von Rufnummer** | **Anruf an** | **Dienst** | **LED** |
|---|---|---|---|
| xxxxxxxx-3333 | OAI MSN | Voice | blinkt 1 mal dann 2 Sek. Pause |
| xxxxxxxx-3334 | OAI MSN | Fax | blinkt 2 mal dann 2 Sek. Pause |
| xxxxxxxx-3335 | OAI MSN | Mail | blinkt 3 mal dann 2 Sek. Pause |

Neben einer Darstellung der übermittelten Statusmeldung durch blinkende LEDs ist auch die Verwendung mehrerer farbiger LEDs möglich.

Besitzt eine Telekommunikationsanlage mehrere LEDs, die benutzerspezifische Statusmeldungen des Verbindungsservers anzeigen, so können die Anzeigemodi "An" und "Blinken" für die LED getrennt angesteuert werden. Dadurch ergibt sich die Möglichkeit, dem Benutzer mehrere Statusmeldungen durch entsprechende Kombinationen anzuzeigen, ohne daß der PC des Benutzers in Betrieb sein muß.

Im Rahmen der "e-Mail-Notification" mit Hilfe der MWI-LEDs ist weiterhin eine Übertragung der Betreffzeile der e-Mail an ein DECT-GAP Mobilteil optional möglich, wobei die Information der Betreffzeile durch den Verbindungsserver bereitgestellt wird.

### 3. Die OAI Benutzerkennung

Das vorstehend beschriebene Prinzip der Integration einer eindeutigen Serienkennung für Telekommunikationsanlagen kann wie folgt realisiert werden.
a) durch eine auf elektronischem Wege auslesbare Serienkennung, die den Anlagenbesitzer gegenüber der Verbindungsserverseite zusammen mit der PIN authentifiziert, wobei der Aufruf der Verbindungsserver-URL und die Kodierung (Serienkennung) transparent erfolgen kann.
b) durch eine manuelle Eingabe der Serienkennung durch den Benutzer
c) durch eine integrierte LAN Netzwerkkarte, deren MAC Adresse als Äquivalent zur Serienkennung verwendet werden kann. Die Software, die die Serienkennung der Telekommunikationsanlage ausliest, liest die MAC Adresse durch Eingabe eines sogenannten EAN Codes, der sich auf der Verpackung befindet, bei entsprechender Anforderung durch die Software ein. Dieser EAN Code, der für die Europäische Artikelnummer gemäß dem bundeseinheitlichen Betriebsnummemsystem steht und unter anderem das Herstellerland, die Betriebsnummer (Hersteller) und einen Produktcode sowie eine Prüfziffer enthält, spezifiziert eindeutig den Telekommunikationsanlagenhersteller und das Modell. Als zweite Eingabe wird vom Benutzer eine 7stellige Seriennummer der Telekommunikationsanlage, die auf dem Geräte aufgedruckt ist, eingegeben. Dieser EAN Code wird in Kombination mit der Seriennummer als Serienkennung der Telekommunikationsanlage verwendet und in kodierter, d.h. in für den Benutzer nicht lesbarer Form beim Aufruf der Verbindungsserver URL als Parameter übergeben. Der Verbindungsserver dekodiert und interpretiert die übergebenen Werte und ermittelt so die OAI Benutzerkennung. Diese eindeutige Account-Kennung wird zur Neuanmeldung des Benutzers verwendet.
d) Durch Auslesen der MAC-Adresse der integrierten Netzwerkkarte und Verwendung als Pseudo-Serienkennung der Telekommunikationsanlage. Gegenüber der EAN ist die MAC Adresse eine die Telekommunikationsanlage eindeutig identifizierende Kennung und kann als Provisorium zur Identifikation verwendet werden. Der RAS-Verbindungsaufbau (RemoteAccess Service auf PC Seite) auf PC-Clientseite führt eine Abfrage der angeschlossenen Telekommunikationsanlage durch und liest die MAC Adresse und/oder den OAI-Baustein zur Ermittlung der Serienkennung aus. Führt diese Abfrage zu keinem Ergebnis, wird eine manuelle Eingabe des EAN Codes und der Seriennummer vom Benutzer eingefordert.

Nach einer ersten manuellen Eingabe dieser Daten werden diese lokal gespeichert. Existiert dieser lokale Eintrag, so wird bei zukünftigen Aufrufen die manuelle Eingabe unterdrückt und die gespeicherten Daten statt der Dialogeingabe für den URL Aufruf und die OAI-Anmeldung verwendet. Diese lokale Datenspeicherung wird immer als Bezugspunkt verwendet und bei jedem Aufruf der OAI-Konfiguration auf Benutzerseite überprüft. So kann ein Vergleich zwischen der von der Telekommunikationsanlage gelesenen und der gespeicherten OAI-Benutzerkennung dazu benutzt werden, eine Veränderung bezüglich. der am PC betriebenen Telekommunikationsanlage ohne weitere Benutzerinteraktion festzustellen, um damit auf Seiten des Managementserver die entsprechenden Updates der Konfiguration der früheren Telekommunikationsanlage bereits zur Übernahme anzubieten.

### 4. Die Hostseite

Für das Verständnis der Umgebung des Verbindungsservers ist die vorstehend in Verbindung mit der Figur 1 beschriebene Unterscheidung zwischen dem "Verbindungsserver" und dem "Managementserver" wichtig. Der Erstzugang führt den Benutzer zum Managementserver und der Benutzer meldet sich als Endkunde an (Neuanmeldung). Die im vorbereiteten und nunmehr aktivierten Benutzerprofil enthaltene URL des Lizenznehmers wird hierbei unveränderbar in die Telekommunikationsanlage/PC übertragen. Die Übermittlung und sichere Speicherung der Verbindungsserver URL führt zur Zuordnung der Telekommunikationsanlagensoftware zu einem Lizenznehmer (einem Verbindungsserver). Die Client- oder Benutzersoftware muß nicht speziell für einen Lizenznehmer vorbereitet werden, sondern steht in Form ein universellen Standardinstallation zur Verfügung.

Bei allen weiteren Zugriffen wird der Benutzer auf diese Verbindungsserver URL geführt, d.h. die Telekommunikationsanlage des Benutzers ist fest mit dem Lizenznehmer assoziiert. Die Unveränderbarkeit dieser Verbindungsserver URL, die für alle folgenden Browseraufrufe zur Telekommunikationsanlagenkonfiguration benutzt wird, garantiert und etabliert einen exklusiven Zugang dieser Telekommunikationsanlage und damit des Benutzers. Nach dem erfolgten Erstzugang, d.h. bei allen weiteren Konfigurationen der Telekommunikationsanlage wählt der Benutzer gemäß Figur 3 den beim Verbindungsserver eingerichteten RAS-Desktop-Link, der ihn über die Verbindungsserver URL zum Managementserver und damit zu seiner Anlagenkonfiguration führt.

Wie vorstehend beschrieben, wählt die eingerichtete RAS Verbindung die vorgegebene ISP Zugangsnummer. Der Benutzer kann natürlich auch alternativ dazu einen anderen Netzwerkzugang einrichten. Wichtig ist, daß der RAS-Desktop-Link, der zum Verbindungsserver verweist, nicht als URL-Link, sondern als Programm implementiert ist, das die Telekommunikationsanlagenabfrage, die Generierung der Benutzerkennung und den Verbindungsserveraufruf in einem Arbeitsgang ausführt.

Der Begriff "Verbindungsserver" bezeichnet die für den Kunden als Zugangspunkt erscheinende Servicestelle eines Lizenznehmers des Providers. Dort ist keine Etablierung einer Programmlogik notwendig, sondern nur die Integration eines Links, der auf die betreffende Seite des Managementservers verweist, wo die Authentifizierung und die Konfiguration der Telekommunikationsanlage des Benutzers erfolgt. Der Zugang zum Managementserver erfolgt somit nicht direkt, sondern nur mittelbar über den Verbindungsserver des Lizenznehmers. Nach der Benutzereinrichtung ist die "referringURL" des Verbindungsservers beim Managementserver bekannt. Zudem enthält der HTML-Header die Benutzerkennung, so dass ein nicht-qualifizierter Zugang zur Managementserver URL abgefangen wird. Besitzt der Benutzer keine Benutzerkennung, erfolgt der Aufruf aber von der URL eines Lizenznehmers, so kann der Benutzer über das zugehörige OAI Programm informiert werden.

Auf der Verbindungsserverseite, die als Anlaufstelle vom Benutzer immer wieder geladen wird, verweist gemäß Figur 4 ein Link auf das Benutzer-Management des Managementserver (OAI-SM). Diese OAI-SM Seite ist für einen Benutzer nicht frei zugänglich, sondern kann nur durch qualifizierte Aufrufe von Lizenznehmern aufgerufen werden. Wählt ein Benutzer diese Seite und erfüllt er nicht die zwei Zugangsbedingungen (1. Telekommunikationsanlagen - OAI Benutzerkennung und 2. OAI Lizenznehmer als Referrer URL), so erfolgt ein Hinweis über "OAI" und mögliche Bezugsquellen.

Der Managementserver verwaltet alle Benutzer der lizenzierten Verbindungsserver. In Figur 4 sind 3 Verbindungsserver A, B, C dargestellt, die über einen Link mit den Datenbanken A, B, C des Benutzer-Managements im Managementserver verbunden sind. Die Anmeldung des Benutzers geschieht dabei - wie vorstehend ausgerührt wurde - nicht auf dem Verbindungsserver, sondern beim Managementserver, der die Datenbank aller Benutzerdaten enthält.

### 5. Das Benutzermanagement

Die Kodierung der Benutzerkennung wird beim SSL-Aufruf des Verbindungsservers an den Managementserver weitergeleitet. Nach erfolgter Dekodierung wird überprüft, ob die übergebene Kennung gültig ist, d.h. ob ein Lizenznehmer hierfür Benutzerlizenzen erworben hat.

Ist dies der Fall, so wird überprüft, ob für diesen Lizenznehmer, d.h. für diesen Verbindungsserver in der zugehörigen Benutzerdatenbank, bereits ein Benutzer für diesen Account eingerichtet wurde. Ist diese Überprüfung negativ, wird ein Neuanmeldung durchgeführt und der Benutzerzugang eingerichtet.

Durch die Eindeutigkeit der Benutzerkennung der Telekommunikationsanlagen, die ein Provider des OAI lizenziert hat, werden für den betreffenden Lizenznehmer in einer Benutzerdatenbank die entsprechenden Benutzer vorkonfiguriert und bereitgestellt.

Meldet sich ein Benutzer mit der über einen Lizenznehmer bereitgestellten Telekommunikationsanlage zum ersten Mal an, wird nach erfolgreicher Kennungsüberprüfung eine Neuanmeldung durchgeführt. Bei diesem Schritt erfolgt eine Eingabe der Benutzerstammdaten sowie die Vereinbarung eines Benutzer-Alias und eines individuellen Zugangspasswortes (PIN): Der Benutzereintrag ist damit aktiviert.

Mit Hilfe der Benutzer PIN wird der Zugriff auf alle Benutzerdaten authentifiziert und die bereitgestellte Kennung des Benutzereintrages aktiviert, um alle Benutzerdaten bei Abmeldung zu verschlüsseln. Ist der Benutzer nicht mit der Managementserverseite verbunden, befinden sich alle Daten im verschlüsselten Zustand, so daß auch bei einem denkbaren Angriff Dritter, die Geheimhaltung der Benutzerdaten sichergestellt ist. Die Entschlüsselung, und damit die Verwendbarkeit der Daten geschieht - transparent - bei der passwortgeschützten Anmeldung durch den Benutzer.

### 6. Die Konfigurationsdateien der Telekommunikationsanlagen

Die Konfigurationsparameter, d.h. zum einen die gewünschten Einstellungen der Telekommunikationsanlagen wie auch die benutzerspezifischen Einträge (MSN, Kurzwahlnummern, ...) werden in Form einer Konfigurationsdatei im Benutzerbereich des Managementservers gespeichert.

Der Benutzer wählt zu Anfang eine Defaultvorgabe, eine Werksvorkonfiguration, der verfügbaren Anlagentechnik und modifiziert diese Vorgaben. Die Datei, die diese Konfiguration enthält, ist beispielsweise eine Windows-typische INI Datei im ASCII-Format.

Da die Daten in diesen Konfigurationsdateien im ASCII Format vorliegen, stellt eine Übernahme von Konfigurationsparametern aus anderen Dateien im Konfigurationsdialog kein Problem dar. Die Forderung eines einfachen Handlings und einer ebenso einfachen Verständlichkeit der Konfigurationsschritte wird durch diese einfache Formatierung weiter unterstützt.

Ist der Benutzer mit dem Managementserver verbunden und möchte eine Konfigurationsdatei an seine Telekommunikationsanlage übermitteln, erfolgt zuerst eine Überprüfung der Formatübereinstimmung der Konfigurationsdatei und der aktuellen anlagenspezifischen Benutzerkennung, wobei die Anmeldung mit der Benutzerkennung erfolgt, so dass anhand der in der Konfigurationsdatei abgelegten KENNUNG ein Abgleich schnell möglich und eine Übertragung einer unstimmigen Konfigurationsdatei an die Anlage damit ausgeschlossen ist. Kann die Konfigurationsdatei verwendet werden, wird durch den Managementserver ein für die CAPI Schnittstelle des Benutzer-PCs verständlicher Objektcode generiert. Die generierte Kodierung der gewünschten Konfiguration wird SSL-gesichert übertragen und über die CAPI Schnittstelle an die Telekommunikationsanlage des Benutzers übermittelt.

## Patentansprüche

1. Verfahren zur Konfiguration und/oder zum Austausch von Daten zwischen einer mit einem Netzwerk (4) gekoppelten Telekommunikationseinrichtung (51a bis 54n) eines Benutzers und einem an das Netzwerk (4) angeschlossenen Host (1),
**dadurch gekennzeichnet,**
**daß** die Konfigurationsparameter für die Inbetriebnahme und für den laufenden Betrieb der Telekommunikationseinrichtung (51a bis 54n) mit einer im Netzwerk (4) bereitgestellten Komponente des Host (1) eingestellt bzw. verändert werden.

2. Verfahren nach Anspruch 1, **dadurch gekennzeichnet, daß** der Host der Telekommunikationseinrichtung (51a bis 54n) benutzerspezifische Daten und/oder Applikationen bereitstellt bzw. verändert.

3. Verfahren nach Anspruch 1 oder 2, **gekennzeichnet durch**
- den Aufbau einer Wählverbindung zwischen der Telekommunikationseinrichtung (51a bis 54n) und dem Host (1),
- Identifikation der Telekommunikationseinrichtung (51a bis 54n) aus einer Serienkennung der Telekommunikationseinrichtung (51a bis 54n) **durch** den Host (1),
- Generieren eines Parametercodes aus der Serienkennung,
- Authentifizierung des Hosts (1) und Personalisierung des Benutzers,
- Initialisierung oder Veränderung der Konfiguration der Telekommunikationseinrichtung (51a bis 54n) und/oder Bereitstellung oder Veränderung benutzerspezifischer Daten und/oder Applikationen.

4. Verfahren nach Anspruch 1 oder 2, **dadurch gekennzeichnet, daß** der Host (1) aus mindestens einem Verbindungsserver (3; 3a bis 3n) und einem Managementserver (2) besteht, wobei
- der Verbindungsserver (3; 3a bis 3n) einen Link enthält, der einen Benutzer über eine URL des Verbindungsservers (3; 3a bis 3n) zum Managementserver (2) führt und
- der Managementserver (2) alle Benutzer der lizenzierten Verbindungsserver (3; 3a bis 3n) verwaltet, die Authentifizierungen und Konfigurationen der Telekommunikationseinrichtungen (51a bis 54n) der Benutzer enthält und die Datenbank aller Benutzerdaten betreibt,
- wobei die einzelnen Verbindungsserver (3; 3a bis 3n) die Zugangspunkte für die Benutzer darstellen, der nicht direkt auf den Managementserver (2), sondern nur über den ihnen zugeordneten Verbindungsserver (3; 3a bis 3n) eines Lizenznehmers des den Managementserver (2) betreibenden Providers zugreifen können.

5. Verfahren nach Anspruch 4, **dadurch gekennzeichnet, daß** ein Erstzugang bzw. eine Neuanmeldung den Benutzer zum Managementserver (2) führt, bei dem er sich als Endkunde anmeldet, daß eine im vorbereiteten und nunmehr aktivierten Benutzerprofil enthaltene URL des Lizenznehmers unverändert in die Telekommunikationseinrichtung (51a bis 54n) des Benutzers übertragen wird und daß die Übermittlung und sichere Speicherung der URL des Verbindungsservers (3; 3a bis 3n) zur Zuordnung der der Telekommunikationseinrichtung (51a bis 54n) zugeordneten Anlagensoftware zum Lizenznehmer bzw. Verbindungsserver (3; 3a bis 3n) führt.

6. Verfahren nach Anspruch 5, **dadurch gekennzeichnet, daß** bei allen weiteren Zugriffen der Benutzer auf die URL des Verbindungsservers (3; 3a bis 3n) geführt wird, wobei die Telekommunikationseinrichtung (51a bis 54n) des Benutzers fest mit dem Lizenznehmer des Providers assoziiert ist und dem Benutzer einen exklusiven Zugang garantiert und etabliert und der Benutzer für alle weiteren Konfigurationen seiner Telekommunikationseinrichtung (51a bis 54n) den beim Verbindungsserver (3; 3a bis 3n) eingerichteten Link wählt, der ihn über die URL des Verbindungsservers (3; 3a bis 3n) zum Managementserver (2) führt.

7. Verfahren nach mindestens einem der voranstehenden Ansprüche, **dadurch gekennzeichnet, daß** die Serienkennung der Telekommunikationseinrichtung (51a bis 54n) des Benutzers den Hersteller und den Typ der Telekommunikationseinrichtung (51a bis 54n) identifiziert und vorzugsweise über einen in Form einer logischen Überprüfung auf Basis der typischen Syntax einer Skriptsprache in einem Authentifizierungprozess einsetzbaren Algorithmus ohne Verwendung einer speziellen Datenbasis verifiziert.

8. Verfahren nach mindestens einem der voranstehenden Ansprüche, **dadurch gekennzeichnet, daß** die Telekommunikationseinrichtung (51a bis 54n) die Existenz einer Standardwählverbindung überprüft und bei nicht existierender Standardwählverbindung eine Wählverbindung einrichtet, die die Zugangsnummer eines Netzwerk-Diensteanbieters (Internetserviceprovider - ISP) wählt, die unveränderbar bei der Installation eines für die Konfiguration der Telekommunikationseinrichtung (51a bis 54n) installierten oder aus einem Navigationsprogramm des Netzwerks (Netzwerkbrowser) geladenen Treiberprogramm hinterlegt wurde.

9. Verfahren nach Anspruch 8, **dadurch gekennzeichnet, daß** von dem in der Telekommunikationseinrichtung (51a bis 54n) installierten Treiber die URL des Verbindungsservers (3; 3a bis 3n) aufgerufen und aus der Serienkennung ein Parametercode generiert wird, der beim Aufruf der URL des Verbindungsservers (3; 3a bis 3n) angehängt bzw. in einem HTML-Header integriert wird.

10. Verfahren nach Anspruch 9, **dadurch gekennzeichnet, daß** bei Einrichtung einer Standardwählverbindung der Benutzer durch den Start eines zusätzlichen Client-PC-Programmes, das in modularer Form Vertragsdaten von Netzwerk-Diensteanbieter (ISP-Vertragsdaten) enthält, über mögliche ISP-Verträge informiert wird.

11. Verfahren nach Anspruch 10, **dadurch gekennzeichnet, daß** dem Benutzer vom Managementserver (2) des Hosts (1) weitere ISP-Verträge zur Verfügung gestellt werden, aus denen der Benutzer auswählen, vorgebbare Zugangsformulare ausdrucken und dem ausgewählten Netzwerk-Diensteanbieter zusenden kann.

12. Verfahren nach mindestens einem der voranstehenden Ansprüche, **dadurch gekennzeichnet, daß** zur Authentifizierung der durch die URL adressierte Bereich des Managementservers (2) die codierten Parameter empfängt und daraus die mitgelieferte Serienkennung mit Hilfe eines Algorithmus ermittelt und daß der Benutzer beim Managementserver (2) angemeldet wird und seine Benutzerdaten bearbeiten kann.

13. Verfahren nach Anspruch 12, **dadurch gekennzeichnet, daß** bei einem Zugang zum Host (1) ohne Verwendung einer authorisierten Telekommunikationseinrichtung (51a bis 54n) der Benutzer eine ihm bei der Erstanmeldung zugeordnete Alias-Zugangskennung und ein zugehöriges Passwort manuell eingibt.

14. Verfahren nach mindestens einem der voranstehenden Ansprüche, **dadurch gekennzeichnet, daß** bei einer Neuanmeldung eines Benutzers ein Benutzerprofil erstellt wird, das neben den Daten für Anschrift, Adresse, Angaben zur Zahlungsabwicklung usw. auch die Standardeinstellung der Telekommunikationseinrichtung (51a bis 54n) enthält.

15. Verfahren nach Anspruch 14, **dadurch gekennzeichnet, daß** der Benutzer ausgehend von der Standardkonfiguration die Konfiguration der Telekommunikationseinrichtung (51a bis 54n) individuell gestalten und über die Netzwerk-Schnittstelle an seine Telekommunikationseinrichtung (51a bis 54n) übermitteln kann, wobei die Übermittlung vorzugsweise über eine gesicherte SSL-Verbindung zwischen dem Explorer auf der Benutzerseite und dem Managementserver (2) des Hosts (1) erfolgt.

16. Verfahren nach mindestens einem der voranstehenden Ansprüche, **dadurch gekennzeichnet, daß** mehrere Konfigurationen der Telekommunikationseinrichtung (51a bis 54n) webbasiert in einem für den Benutzer geschützten Bereich des Hosts (1) abspeicherbar sind, die mit seiner Serienkennung fest verbunden sind.

17. Verfahren nach mindestens einem der voranstehenden Ansprüche, **dadurch kennzeichnet,** daß der Host (1) die Software verschiedener, an ihn ankoppelbarer Typen von Telekommunikationseinrichtungen (51a bis 54n) enthält, so daß die gesamte Funktionalität der Telekommunikationseinrichtung (51a bis 54n) eines Benutzers über die Netzwerkschnittstelle zum Host (1) durch den Benutzer steuerbar ist.

18. Verfahren nach mindestens einem der voranstehenden Ansprüche, **dadurch gekennzeichnet, daß** neben der Standardfunktionalität der Konfiguration der Telekommunikationseinrichtung (51a bis 54n) Konfigurationsparameter frei wählbar sind.

19. Verfahren nach mindestens einem der voranstehenden Ansprüche, **dadurch gekennzeichnet, daß** gespeicherte Gesprächsdaten ausgelesen und vom Host (1) gepflegt werden.

20. Verfahren nach Anspruch 19, **dadurch gekennzeichnet, daß** die Gesprächsdatenübermittlung automatisch bei jeder Benutzerauthentifizierung erfolgt.

21. Verfahren nach mindstens einem der voranstehenden Ansprüche, **dadurch gekennzeichnet, daß** der Benutzer wahlweise eine ISDN-Wählverbindung vom Host (1) zur Telekommunikationseinrichtung (51a bis 54n) aufbauen und die gewünschte Konfiguration übertragen kann.

22. Verfahren nach Anspruch 21, **dadurch gekennzeichnet, daß** mindestens zwei Konfigurationseinstellungen speicherbar sind, derart, daß mittels einer Wählverbindung die Konfiguration der Telekommunikationseinrichtung (51a bis 54n) zwischen den zwei Konfigurationseinstellungen gewechselt werden kann, wobei neben dem Zugang zum Host (1) über das Netzwerk mit Hilfe eines WAP-Handys eine Konfigurationsumschaltung vorgenommen werden kann.

23. Verfahren nach Anspruch 21 oder 22, **dadurch gekennzeichnet, daß** der Konfigurationswechsel zwischen zwei in der Telekommunikationseinrichtung (51a bis 54n) gespeicherten Konfigurationen ohne Authentifizierung erfolgt und lediglich ein Zugangspasswort (PIN) erfordert.

24. Verfahren nach mindestens einem der voranstehenden Ansprüche, **dadurch gekennzeichnet, daß** als Wählverbindung eine ISDN-Wählverbindung aufgebaut wird und daß zur Benachrichtigung des Benutzers der Host (1) über die ISDN-Wählleitung eine festgelegte MSN der Telekommunikationseinrichtung (51a bis 54n) anruft, wobei der Host (1) bei diesem Anruf eine festgelegte Rufnummer übermittelt und die Verbindung auslöst, wenn er anhand der ISDN D-Kanal-Meldung erkennt, daß die Telekommunikationseinrichtung (51a bis 54n) den Ruf erkannt hat.
